# FASCICULE DE BREVET EUROPEEN

(11) **EP 1 576 430 B1**
(45) Date de publication et mention de la délivrance du brevet: **06.06.2012**
(21) Numéro de dépôt: 03732940.6
(22) Date de dépôt: 16.06.2003
(51) Int. Cl.: G05B 19/04

(54) **PROCEDE DE CONFIGURATION D'UN RESEAU**
VERFAHREN UM EINES NETZWERKES ZU KONFIGURIEREN
METHOD FOR CONFIGURATION OF A NETWORK

(30) Priorité: 18.06.2002 FR 0207490
(43) Date de publication de la demande: 21.09.2005
(73) Titulaire: Somfy SAS, 74300 Cluses (FR)
(72) Inventeur: CHERON, Eric, F-74440 Taninges (FR)
(74) Mandataire: Bugnion Genève
(86) Numéro de dépôt international: PCT/IB2003/002665
(87) Numéro de publication internationale: WO 2003/107105

(56) Documents cités:
- EP-A- 0 495 397
- EP-A- 0 905 590
- EP-A- 1 130 333
- WO-A-99/31559
- US-A- 5 844 888
- US-A1- 2002 073 183

## Description

La présente invention se rapporte au domaine de la communication à distance entre émetteurs d'ordres et récepteurs d'ordres permettant la commande d'une charge électrique intervenant dans la protection et/ou le confort dans un bâtiment telle qu'un actionneur pour stores ou volets roulants, un système d'éclairage, de chauffage ou d'air conditionné. Elle concerne, en particulier, un procédé de configuration selon le préambule de la revendication 1.

Avec l'intérêt croissant de la radio comme moyen de communication entre de tels éléments primitivement liés de manière filaire, il y a multiplication des récepteurs radio disposés dans des emplacements souvent difficiles d'accès tels que des faux plafonds.

Cette difficulté d'accès, qu'on ne rencontre pas sur des réseaux de communication radio entre équipements domestiques ou informatiques comme Bluetooth (marque déposée), pose des problèmes notamment lors du premier appariement visant à valider des relations entre émetteurs d'ordres et récepteurs d'ordres.

Il a donc été proposé diverses méthodes ou moyens visant à faciliter les opérations de premier appariement. Les demandes de brevet EP 1 085 481 et EP 0 921 507 en donnent des exemples.

Par ailleurs, de l'état de la technique, on connaît des dispositifs de type « télécommande universelle » ou encore « télécommande interactive » capables, du fait d'une liaison bidirectionnelle, de dialoguer avec tous les objets communicants placés dans la zone de portée, d'afficher les caractéristiques de ces objets et de valider ou non, au gré de l'utilisateur, un lien de communication avec eux. On trouve la description détaillée de tels systèmes dans le brevet US 5,909,183 ou dans la demande WO 0171685.

Le brevet américain US-A1-5 844 888 décrit un procédé de configuration d'un réseau d'éléments de commande d'équipements ainsi qu'une installation de commande de ces équipements comprenant des émetteurs d'ordres, des récepteurs d'ordres et un outil de configuration permettant de sélectionner les émetteurs et récepteurs d'ordre et lire leur identité, le groupage des appareils se faisant par l'intermédiaire de l'émetteur envoyant au récepteurs une identité de groupe créé aléatoirement par l'outil de configuration, identité dont il faut vérifier si elle pas pas déjà été utilisée pour un autre groupe d'où la nécessité d'un protocole supplémentaire.

Dans les bâtiments de type commercial, et notamment les immeubles de bureaux, le nombre élevé de systèmes commandés rend problématique ces opérations de premier appariement. En effet, les actionneurs sont progressivement disposés dans le bâtiment pendant toute la durée de la phase de second oeuvre du chantier, alors que les émetteurs d'ordres ne seront mis en place qu'à la fin de cette phase, immédiatement avant la livraison, afin d'éviter les vols ou dégradations involontaires en cours de chantier.

Il est donc indispensable de proposer une technique d'appariement extrêmement rapide et sûre.

Les systèmes de l'art antérieur présentent des inconvénients. D'une part, ils sont beaucoup trop coûteux pour être appariés et servir ensuite de simple commande à distance de protection solaire ou d'éclairage. Ensuite, ils sont incapables de satisfaire le besoin de rapidité car ils prennent en compte tous les dispositifs communicants se trouvant à portée. Le choix d'un de ces dispositifs, aussi bien par icônes que par menu déroulant, est une perte de temps considérable, d'autant qu'il faut souvent s'assurer, par la réaction physique du produit, qu'on s'adresse bien à celui désiré. Enfin, ils sont trop complexes pour pouvoir être mis en place par un ouvrier non qualifié.

Le but de l'invention est la mise en oeuvre d'un procédé de configuration palliant les inconvénients cités. L'invention se propose en particulier de mettre en oeuvre un procédé de configuration peu coûteux, rapide et simple. L'invention a encore pour objet une installation permettant la mise en oeuvre un tel procédé.

Le procédé de configuration selon l'invention est caractérisé par la partie caractérisante de la revendication 1.

Différents modes d'exécution du procédé sont définis par les revendications dépendantes 2 à 7.

L'installation de commande selon l'invention est définie par la revendication indépendante 8.

Différents modes de réalisation de l'installation sont définis par les revendications dépendantes 9 à 13.

Le dessin annexé représente, à titre d'exemples, deux modes d'exécution du procédé selon l'invention ainsi qu'une installation permettant la mise en oeuvre d'un tel procédé.
La figure 1 est un schéma de l'installation permettant la mise en oeuvre du procédé selon l'invention.
La figure 2 est un schéma d'une variante de l'installation permettant la mise en oeuvre du procédé selon l'invention.
La figure 3 est un ordinogramme du procédé de configuration selon un premier mode d'exécution.
La figure 4 est un ordinogramme du procédé de configuration selon un deuxième mode d'exécution.

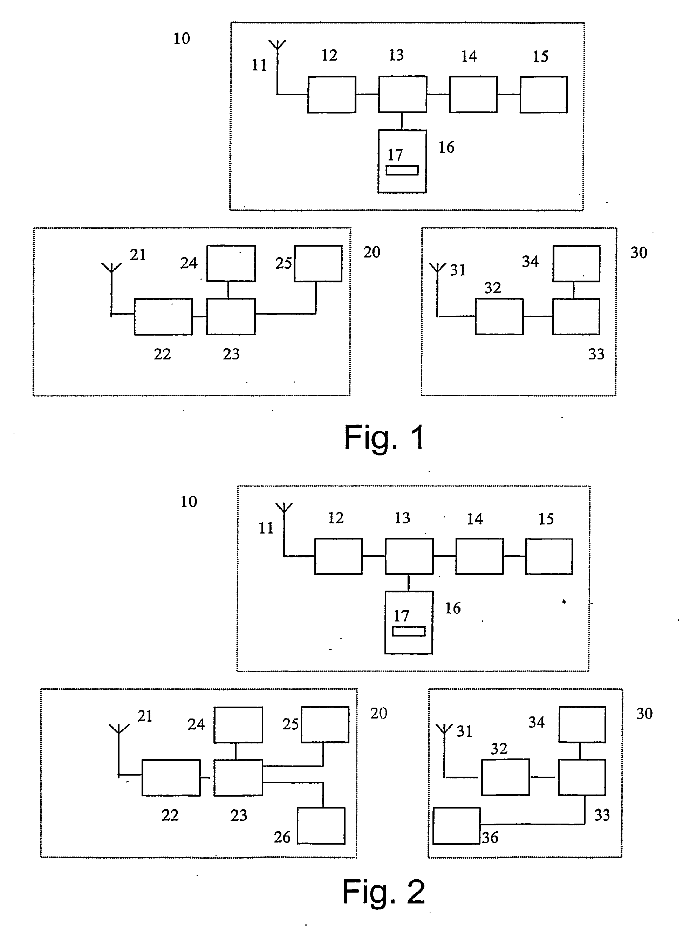

L'installation schématisée à la figure 1 comprend un récepteur d'ordres 10, un émetteur d'ordres 30 et un outil de configuration 20 pouvant communiquer les uns avec les autres au moyen de liaisons radiofréquences. A des fins de clarté, il n'est représenté qu'un seul récepteur d'ordres 10 et qu'un seul émetteur d'ordres 30. Cependant, le procédé selon l'invention présente un intérêt lorsqu'il s'applique à une installation comprenant plusieurs récepteurs d'ordres 10 et/ou plusieurs émetteurs d'ordres 30.

Le récepteur d'ordres 10 comprend un émetteur-récepteur radiofréquences 12 raccordé, d'une part, à un dispositif de couplage de type antenne 11 et, d'autre part, à une unité de traitement 13 de type microprocesseur ou microcontrôleur. Celle-ci pilote un actionneur 14 dont l'alimentation électrique n'est pas représentée. L'actionneur 14 agit sur un équipement 15 tel qu'un store, une porte, un volet roulant, un radiateur de chauffage, un dispositif d'éclairage, un dispositif de climatisation ou un dispositif de ventilation.

Bien que l'unité de traitement 13 soit préférentiellement un microcontrôleur qui intègre une zone mémoire, on a représenté, ici de manière séparée, une mémoire 16, afin d'y faire figurer explicitement une zone mémoire 17 d'identification et de paramétrage de commande. Cette zone de mémoire est en particulier destinée à contenir l'identifiant de l'émetteur ou des émetteurs d'ordres et les paramètres à transmettre à cet émetteur ou ces émetteurs d'ordres.

L'outil de configuration 20 comprend une antenne 21, un émetteur-récepteur radiofréquences 22, une unité de traitement 23 de type microcontrôleur, un moyen de saisie 24 de type clavier et/ou d'acquisition de type lecteur de support de données et un écran 25 ou un moyen d'affichage ou un moyen d'impression. De préférence, l'outil de configuration 20 contient en mémoire la description logique de l'installation, c'est-à-dire la liste des appariements à établir entre les éléments de type récepteur d'ordres et les éléments de type émetteur d'ordres, ces éléments étant décrits au moins par un identifiant logique.

L'émetteur d'ordres 30 comprend une antenne 31, un émetteur-récepteur radiofréquences 32, une unité de traitement 33 de type microcontrôleur, une interface de commande de type clavier 34. L'émetteur d'ordres 30 contient au moins un identifiant physique dans une partie de mémoire non effaçable du microcontrôleur 33.

Les émetteurs d'ordres 30, les récepteurs d'ordres 10 et l'outil de configuration 20 sont susceptibles de communiquer de manière bidirectionnelle. De manière simple, cette communication peut être effectuée sans fil par radiofréquences à l'aide d'un protocole commun comme c'est le cas dans l'installation précédemment décrite. Cependant, une communication filaire, par bus séparé et/ou par courants porteurs sur le réseau d'alimentation, est possible. Il est encore possible d'utiliser des moyens différents selon le sens de la transmission ou selon qu'il s'agit d'une transmission entre l'outil de configuration 20 et les émetteurs d'ordres 30, entre l'outil de configuration 20 et les récepteurs d'ordres 10 ou entre les émetteurs d'ordres 30 et les récepteurs d'ordres 10 : par exemple, on peut utiliser une liaison filaire directe ou un simple couplage inductif dans le premier cas, une liaison par bus dans le deuxième et une liaison radiofréquence sans fil dans le troisième.

Selon des variantes de réalisation, la communication entre les émetteurs d'ordres 30 et l'outil de configuration 20 n'est pas réalisée par le même moyen de transmission que la communication entre les émetteurs d'ordres 30 et les récepteurs d'ordres 10. Ces variantes permettent notamment une communication rapprochée sans risque d'interférences entre un seul émetteur 30 et l'outil de configuration 20.

Selon une première variante de réalisation, représentée à la figure 2, cette communication est réalisée de manière galvanique : les éléments de communication rapprochée consistent en un connecteur 26 sur l'outil de configuration 20 et en un connecteur 36 sur les émetteurs d'ordres 30.

Selon une deuxième variante de réalisation, cette communication se fait de manière inductive ou, plus généralement, par couplage de type magnétique. Les émetteurs d'ordres 30 et l'outil de configuration 20 comprennent alors des bobines d'induction par exemple réalisées sous forme de spires imprimées sur leur circuit et permettant d'émettre et de recevoir des champs magnétiques.

Selon une troisième variante de réalisation, cette communication a lieu par voie optique. Les émetteurs d'ordres et l'outil de configuration comprennent alors des diodes émettant des rayonnements visibles ou infrarouges et des photodiodes ou des phototransistors sensibles à ces rayonnements.

Ces diverses transmissions permettent au moins une communication des émetteurs d'ordres vers l'outil de configuration mais peuvent aussi être bidirectionnelles. Tous ces moyens sont largement connus et ne sont donnés qu'à titre d'exemples.

Selon une dernière variante de réalisation, chaque émetteur d'ordres est muni d'une étiquette optique, sur laquelle est imprimée une référence telle qu'un code barres, collée sur son boîtier et permettant son identification. L'outil de configuration est alors muni d'un lecteur de type scanner.

Préférentiellement, l'outil de configuration 30 est un ordinateur portable muni d'une interface de communication radiofréquences, bus ou courants porteurs et, éventuellement, d'un scanner optique ou encore d'un lecteur au standard IRDA.

Une fois l'installation configurée, plusieurs émetteurs d'ordres pourront en général commander un même récepteurs d'ordres et, inversement, certains émetteurs d'ordres pourront commander plusieurs récepteurs d'ordres.

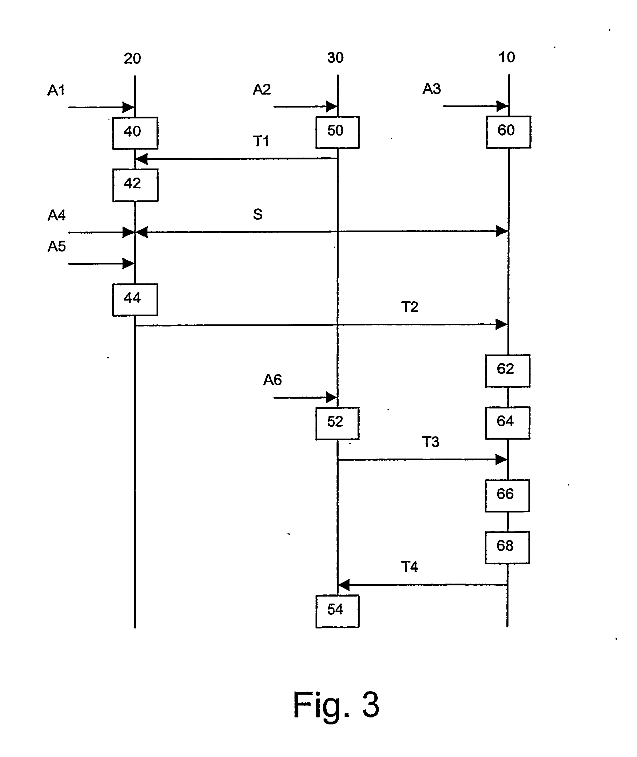

Un premier mode d'exécution du procédé selon l'invention est représenté par l'ordinogramme de la figure 3.

Au cours d'un chantier de second oeuvre, les différents récepteurs d'ordres 10 sont installés dans un bâtiment. Une action symbolisée par la flèche A3 permet d'activer sur chaque récepteur d'ordres 10 un programme 60 d'attente et d'exécution d'ordres provenant de tout émetteur d'ordres 30. Cette action peut, par exemple, être provoquée par la mise sous tension du récepteur d'ordres. Du fait de l'existence de ce programme 60, l'installateur peut alors vérifier, s'il le souhaite, le bon fonctionnement du ou des produits qu'il vient d'installer, avec son propre émetteur d'ordres, puis laisser le récepteur d'ordres en l'état jusqu'à la fin du chantier.

De manière totalement séparée et décalée dans le temps, le technicien concepteur de l'installation en prépare la phase finale de configuration. Cette configuration a été en général prévue, dessinée et enregistrée en donnant à chaque composant de l'installation une adresse ou un identifiant logique. Cet identifiant logique est différent de l'identifiant physique codé de manière indépendante par chaque constructeur d'équipement et est, en général, plus simple.

Une action sur l'outil de configuration 20 symbolisée par la flèche A1 permet d'activer un programme 40 d'attente de réception d'identifiant physique. Selon les variantes de réalisation de l'installation, cette réception se fait au moyen d'une communication radio ou d'un moyen de communication rapprochée. L'action A1 est par exemple réalisée au moyen du clavier 24 ou résulte d'un choix dans un menu déroulant ou d'icônes. De manière préférée, l'action A1 permet d'indiquer au programme 40 à quel identifiant logique se rapportera l'identifiant physique attendu.

Une action sur un des émetteurs d'ordres 30 symbolisée par la flèche A2 active un programme 50 de recherche en mémoire de son identifiant physique et, selon les variantes de réalisation de l'installation, de transmission de cet identifiant soit par un moyen radio, soit par un moyen de communication rapprochée. La transmission de l'identifiant physique d'un des émetteurs d'ordres 30 vers l'outil de configuration 20 est représentée par la flèche T1.

A réception de cet identifiant, l'outil de configuration 20 active un programme 42 d'enregistrement de l'identifiant physique dans une zone mémoire de l'unité de traitement 23. De manière préférée, cet identifiant physique est immédiatement associé par le programme 42 à l'identifiant logique.

Les actions permettant la transmission de l'identifiant physique d'un émetteur d'ordres 30 sont itérées sur l'ensemble des émetteurs d'ordres, jusqu'à ce que tous ces émetteurs 30 aient transmis leur identifiant physique à l'outil de configuration 20.

On notera que, dans le cas simplifié où l'identifiant physique de chaque émetteur 30 est dupliqué sur une étiquette, l'action A2 consiste simplement à présenter l'étiquette de chaque émetteur d'ordres 30 face à un scanner présent sur l'outil de configuration 20 ou à taper son identifiant sur le clavier de l'outil de configuration.

Quelques temps avant la fin du chantier, le technicien se rend sur site avec l'outil de configuration 20. Selon des moyens connus de l'art antérieur, il provoque l'entrée en communication de l'outil de configuration 20 avec les récepteurs d'ordres 10 déjà installés. Cette action est représentée par la flèche A4. Le technicien sélectionne à sa guise l'un de ces récepteurs d'ordres 10 à l'aide d'icônes et/ou d'un curseur sur une liste d'éléments affichés sur son écran ou par tout moyen connu. Il vérifie à loisir que les récepteurs d'ordres 10 choisis répondent bien physiquement à toute commande et qu'il n'y a aucun doute sur leur localisation. Ces opérations de sélection de récepteurs d'ordres et de vérification de leurs réponses aux commandes sont globalement représentées par la double flèche S.

Le technicien provoque alors une action A5 d'activation d'un programme 44 de recherche de l'identifiant physique de l'émetteur d'ordres 30 (ou des émetteurs) destiné(s) à commander le récepteur d'ordres 10 sélectionné et de transmission de cet identifiant (ou de ces identifiants) de l'outil de configuration 20 vers le récepteur d'ordres 10 sélectionné. Ceci constitue une deuxième étape de transmission symbolisée par la flèche T2.

Au cours de cette transmission T2, il peut être intéressant de communiquer également au récepteur d'ordres 10 son propre identifiant logique, une clé de codage, l'identifiant logique de l'émetteur d'ordres 30 destiné à le commander ou toute autre information.

Si plusieurs émetteurs d'ordres sont destinés à commander ce récepteur d'ordres, l'information transmise contient l'ensemble de leurs identifiants physiques.

Préférentiellement, l'action A5 sur l'outil de configuration consiste à sélectionner, dans une liste pré-établie résultant du plan de l'installation, l'identifiant logique d'un des récepteurs d'ordres. Ainsi, l'envoi du ou des identifiants physiques des émetteurs d'ordres destinés à commander ce récepteur suit directement la désignation de l'identifiant logique du récepteur sélectionné.

A réception de ces informations, le programme 62 procède à l'enregistrement de ces données dans la zone mémoire 17 du récepteur 10.

Le programme 64 qui suit provoque un changement de configuration du récepteur d'ordres 10, celui-ci refuse désormais d'exécuter des ordres provenant d'une source autre que l'outil de configuration ou les émetteurs d'ordres dont les identifiants physiques viennent d'être enregistrés puis se termine par une attente d'ordre. L'installation est dès lors configurée pour ce récepteur d'ordres.

Le technicien peut profiter de sa présence sur site pour indiquer par étiquetage la localisation future des émetteurs d'ordres grâce à leur identifiant logique.

L'action A4, l'action A5 et les opérations associées sont itérées sur l'ensemble des récepteurs d'ordres. Elles ne nécessitent pas la présence des émetteurs d'ordres et peuvent s'étaler sur plusieurs jours sans inconvénient.

Le dernier jour du chantier, les émetteurs d'ordres 30 sont installés, en étant disposés aux emplacements prévus. Un double étiquetage, d'une part, sur les émetteurs et, d'autre part, sur les emplacements facilite la mise en place rapide et sans erreur. Cette opération ne nécessite aucune compétence technique. Il n'est pas indispensable de procéder à des essais à moins qu'ils se limitent à une stricte vérification de bon fonctionnement de l'installation.

Après cette étape, une action A6 sur une des touches de commande d'un des émetteurs d'ordres provoque l'activation du programme 52 d'envoi de l'émetteur d'ordres vers un ou des récepteurs d'ordres d'un code de commande correspondant à cette touche, accompagné de l'identifiant physique de l'émetteur d'ordres. Cette transmission est symbolisée par la flèche T3.

La réception de ces informations active un programme 66 d'authentification de l'émetteur d'ordres et d'exécution de l'ordre demandé s'il a été transmis par un émetteur d'ordres connu du récepteur d'ordres. L'installation fonctionne alors normalement. L'action A6 peut être simplement provoquée par le premier utilisateur de l'émetteur d'ordres.

De manière facultative, un programme 68 peut ensuite être activé. Ce programme provoque la transmission T4 du récepteur d'ordres vers l'émetteur d'ordres d'informations et/ou d'instructions spécifiques relatives à un fonctionnement particulier du récepteur d'ordres et qui ont été communiquées à ce dernier par l'outil de configuration lors de la transmission T2. Ces données sont enregistrées par le programme 54 dans la mémoire de l'émetteur d'ordres.

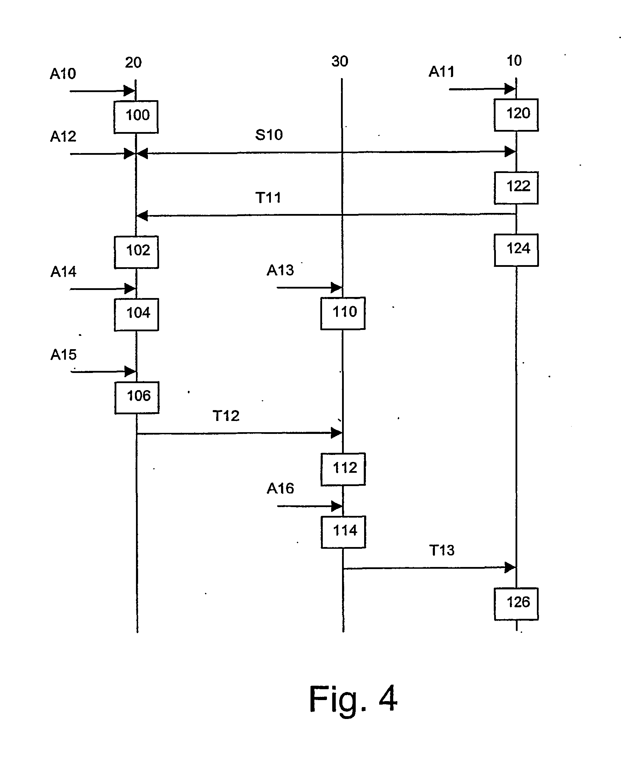

Un deuxième mode d'exécution du procédé selon l'invention est représenté par l'ordinogramme de la figure 4. Celui-ci est applicable au seul cas où la communication est possible depuis l'outil de configuration 20 vers les émetteurs d'ordres 30. Ce deuxième mode de réalisation diffère du premier en ce que ce sont cette fois les récepteurs d'ordres 10 qui envoient une clé d'authentification vers l'outil de configuration 20 au cours d'une première transmission.

Au cours d'un chantier de second oeuvre, les différents récepteurs d'ordres sont installés dans un bâtiment. Une action A11 permet d'activer sur chaque récepteur d'ordres 10 un programme 120 d'attente et d'exécution d'ordres provenant de tout émetteur d'ordres. Cette action peut par exemple être provoquée par la mise sous tension du récepteur d'ordres 10. Du fait de l'existence de ce programme 120, l'installateur peut alors vérifier, s'il le souhaite, le bon fonctionnement du ou des produits qu'il vient d'installer, avec son propre émetteur d'ordres, puis laisser le récepteur d'ordres 10 en l'état jusqu'à la fin du chantier.

De manière totalement indépendante, mais postérieure dans le temps, le technicien concepteur de l'installation se rend sur site. Il effectue une action A10 sur l'outil de configuration 20 qui permet d'activer un programme 100 d'attente de réception de clé d'authentification. L'action A10 est, par exemple, réalisée au moyen du clavier ou résulte d'un choix de menu déroulant ou d'icône sur l'outil de configuration 20.

Selon des moyens connus de l'art antérieur, le technicien provoque l'entrée en communication de l'outil de configuration 20 avec les récepteur d'ordres 10 déjà installés. Cette action est représentée par la flèche A12. Le technicien sélectionne à sa guise l'un de ces récepteurs d'ordres 10 à l'aide des icônes affichées et/ou en déplaçant un curseur sur la liste des éléments à portée affichés sur son écran ou par tout autre moyen connu. Il vérifie à loisir que le récepteur d'ordres 10 choisi répond bien physiquement à toute commande et qu'il n'y a aucun doute sur sa localisation. Les opérations de sélection d'un des récepteurs d'ordres et de vérification de leurs réponses aux commandes sont globalement représentées par la double flèche S10.

Se sachant sélectionné par l'outil de configuration 20, le récepteur d'ordres 10 active un programme 122 de recherche en mémoire et de transmission d'une clé d'authentification vers l'outil de configuration 20. Cette transmission est représentée par la flèche T11.

A réception de cette clé d'authentification, l'outil de configuration active un programme 102 d'enregistrement de cette clé. De manière préférée, la clé est immédiatement associée par le programme 104 à l'identifiant logique désigné par le technicien au cours d'une action A14, consistant en un choix, par exemple à l'aide d'un curseur, au sein d'une liste d'identifiants logiques de récepteurs. Cette liste est pré-enregistrée dans l'outil de configuration 20 au cours d'une opération préalable de définition logique de l'installation.

Les actions permettant la transmission de la clé d'authentification d'un récepteur d'ordres 10 sont itérées sur l'ensemble des récepteurs d'ordres 10, jusqu'à ce que ces récepteurs d'ordres 10 aient tous transmis leur clé d'authentification à l'outil de configuration 20.

Après chaque transmission T11, chaque récepteur d'ordres 10 active un programme 124 qui change sa configuration. Il n'exécute désormais que des ordres provenant d'un émetteur d'ordres possédant sa clé d'authentification ou de l'outil de configuration 20. Le programme 124 se termine par une attente de réception d'ordre.

En dehors du chantier, le technicien peut alors configurer les émetteurs d'ordres 30. Il prépare un des émetteurs d'ordres par une action A13 qui a pour effet d'activer un programme 110 d'attente de réception de clé d'authentification. L'action A13 peut consister en l'insertion de la pile ou en une action spécifique sur une combinaison de boutons.

Le technicien provoque ensuite une action A15 sur l'outil de configuration qui active un programme 106 de recherche de la clé du récepteur d'ordres destiné à être commandé par cet émetteur et de transmission de cette clé vers l'émetteur d'ordres. Cette transmission est représentée par la flèche T12.

Au cours de cette étape, il peut être intéressant de communiquer également à l'émetteur d'ordre son propre identifiant logique, l'identifiant logique du récepteur d'ordres ou toute autre information.

Si plusieurs récepteurs d'ordres sont destinés à être commandés par cet émetteur d'ordres, l'information transmise lors de T12 contient l'ensemble des clés d'authentification de ces récepteurs.

Préférentiellement, l'action A15 sur l'outil de configuration consiste à sélectionner, dans une liste pré-établie résultant du plan de l'installation, l'identifiant logique d'un des émetteurs d'ordres. Ainsi, l'envoi de la ou des clés d'authentification des récepteurs d'ordres destinés à être commandés par cet émetteur d'ordres suit directement la désignation de l'identifiant logique de l'émetteur sélectionné.

A réception de ces informations, le programme 112 procède à l'enregistrement de ces données dans une zone de mémoire du microcontrôleur 33 de l'émetteur d'ordres 30.

Le technicien peut profiter de cette étape pour indiquer par étiquetage la localisation de l'émetteur d'ordres avec son identifiant logique.

L'action A15 et les opérations associées sont itérées sur l'ensemble des émetteurs d'ordres. Elles ne nécessitent pas d'être effectuées sur chantier et peuvent s'étaler sur plusieurs jours sans inconvénient. Une fois ces opérations terminées, l'installation est configurée.

Les émetteurs d'ordres sont disposés aux emplacement prévus le dernier jour du chantier. Un double étiquetage sur les émetteurs et sur les emplacements facilite une mise en place rapide et sans erreur. Cette opération ne nécessite aucune compétence technique. Il n'est pas indispensable de procéder à des essais à moins qu'ils se limitent à une stricte vérification de bon fonctionnement de l'installation.

Une fois les émetteurs d'ordres mis en place, une action A16 sur une des touches de commande d'un de ces derniers provoque l'activation d'un programme 114 d'envoi du code de la commande correspondant à la touche, accompagné de la clé d'authentification du récepteur d'ordres. Ceci est représenté par la flèche T13.

La réception de ces information par le récepteur d'ordres active un programme 126 d'authentification de l'émetteur d'ordres et d'exécution de l'ordre demandé s'il a été transmis par un émetteur d'ordres connu du récepteur d'ordres. L'installation fonctionne alors normalement. L'action A16 peut être simplement provoquée par le premier utilisateur de l'émetteur d'ordres.

On remarquera que dans les deux formes d'exécution du procédé, la nature de l'information objet des étapes de transmission est différente. Elle consiste en un identifiant physique dans le premier mode d'exécution et en une clé d'authentification dans le deuxième. Cette différence résulte d'une contrainte de sécurité. Dans les procédures d'authentification les plus simples connues de l'homme du métier, il suffit que le récepteur apprenne l'identifiant physique du ou des émetteurs le commandant ou que le récepteur transmette sa clé ou une de ses clés d'authentification à l'émetteur ou aux émetteurs le commandant. Il est clair que ce type d'authentification présente des limites en matière de sécurité. Pour pallier ces inconvénients, il est connu de procéder à des authentifications plus complexes, reposant, par exemple, sur une technique dite de challenge et telles que ce qui est transmis au cours d'un appariement correspond à un élément de calcul, par exemple un germe à utiliser dans un polynôme. De telles techniques appliquées au procédé décrit entrent évidemment dans le cadre de l'invention. En effet, ce qui est important dans cette invention est que soit communiquée depuis l'émetteur d'ordres vers l'outil de configuration puis depuis l'outil de configuration vers le récepteur d'ordres ou inversement depuis le récepteur d'ordres vers l'outil de configuration et inversement depuis l'outil de configuration vers l'émetteur d'ordres, au moins une information à caractère d'authentification et/ou d'identification permettant la validation de l'exécution d'une commande au cours d'une transmission ultérieure d'un ordre de commande. Cette communication inclut soit directement l'information, soit un résultat de calcul utilisant cette information.

De même, les principes d'authentification utilisés peuvent prévoir une transformation mathématique de l'information reçue dans l'outil de configuration avant que cette information ne soit émise par l'outil de configuration. Il peut tout aussi bien s'agir d'une transformation logique, par un rapprochement avec une information déjà contenue dans l'outil de configuration, tel qu'une lecture dans une table ou une conversion.

Il est enfin possible de combiner les deux modes d'exécution précédents. En effet, les émetteurs d'ordres comme les récepteurs d'ordres sont successivement utilisés ou désignés dans une relation avec l'outil de configuration, qui communique en retour à chacun d'eux soit son identifiant logique, soit toute information de germe ou de code utilisable pour valider un lien de communication futur entre émetteur et récepteur d'ordres.

De manière préférée, chaque élément est représenté par un identifiant logique au sein de l'outil de configuration. A défaut, ce sera directement son identifiant physique qui sera utilisé pour le représenter.

Bien entendu, le fait de dissocier l'outil de configuration en plusieurs éléments coopérant les uns avec les autres constitue une variante, non décrite en détail, mais évidente pour l'homme du métier. Il est parfaitement concevable que l'outil de configuration soit en fait constitué d'une partie mobile communicant avec un poste fixe contenant la base de données relative à l'installation. La partie mobile ne sert alors que d'intermédiaire permettant l'affichage de données stockées par ailleurs et la mise en relation avec les récepteurs d'ordres installés.

On peut encore ne pas stocker dans l'outil de configuration l'ensemble des liens logiques, mais simplement ceux utiles à une phase donnée de la configuration.

De manière dynamique, on peut également prévoir que ces liens soient stockés préalablement dans plusieurs unités fixes, voire même dans certains des récepteurs d'ordres à capacité mémoire suffisante et qu'ils ne soient transmis à la partie mobile de l'outil de configuration que sur ordre ou quand celle-ci devient à portée radio de ces éléments.

Enfin, il est clair que chaque transmission représentée de manière unidirectionnelle par les flèches T1, T2, T3, T11, T12, T13 peut donner lieu en fait à une série bidirectionnelle d'échanges telles qu'une communication de reconnaissance d'appartenance à un même réseau ou un envoi d'accusé de réception. Cependant, les flèches indiquent le sens de transfert principal de l'information à caractère d'authentification.

L'installation précédemment décrite présente des récepteurs d'ordres permettant de commander des équipements tels que des volets ou des stores. Cependant, on peut envisager d'intégrer à l'installation des récepteurs d'ordres liés à des capteurs tels que des capteurs de température, d'ensoleillement, de qualité de l'air, de concentration en CO₂ ou d'humidité. De tels récepteurs d'ordres présentent les mêmes capacités de communication que les récepteurs d'ordres liés à des équipements. Ils peuvent, par conséquent, communiquer avec l'outil de configuration, avec les émetteurs d'ordres et avec les autres récepteurs d'ordres.

## Revendications

1. Procédé de configuration d'un réseau d'éléments (10, 30) de commande d'équipements (15) comprenant au moins un émetteur d'ordres (30) muni d'une mémoire et constituant un type d'éléments et au moins un récepteur d'ordres (10) muni d'une mémoire et constituant un autre type d'éléments, **caractérisé en ce qu'**il comprend les étapes suivantes :
- sélectionner au moins un élément d'un premier type,
- rechercher dans sa mémoire ou dans leur mémoire respective au moins une information,
- transmettre l'information ou les informations à un outil de configuration (20),
- enregistrer l'information ou les informations dans l'outil de configuration (20),
- sélectionner au moins un élément d'un deuxième type,
- transmettre de l'outil de configuration (20) à l'élément ou aux éléments du deuxième type sélectionnés l'information ou les informations de l'élément ou des éléments du premier type destinés à entrer en relation avec l'élément ou les éléments du deuxième type sélectionnés,
- enregistrer l'information ou les informations dans l'élément ou les éléments du deuxième type sélectionnés.

2. Procédé de configuration selon la revendication 1, **caractérisé en ce qu'**il comprend l'étape préliminaire suivante :
- enregistrer dans l'outil de configuration (20) des identifiants logiques associés à au moins certains éléments du réseau et les relations que ceux-ci sont destinés à entretenir entre eux.

3. Procédé de configuration selon la revendication 1 ou 2, **caractérisé en ce que** l'information ou les informations contiennent des données d'identification et/ou des données d'authentification.

4. Procédé de configuration selon l'une des revendications 1 à 3, **caractérisé en ce que** les éléments du premier type sont des émetteurs d'ordres (30) et **en ce que** les éléments du deuxième type sont des récepteurs d'ordres (10).

5. Procédé de configuration selon la revendication 4, **caractérisé en ce que** les informations sont des identifiants physiques.

6. Procédé de configuration selon l'une des revendications 1 à 3, **caractérisé en ce que** les éléments du premier type sont des récepteurs d'ordres (10) et **en ce que** les éléments du deuxième type sont des émetteurs d'ordres (30).

7. Procédé de configuration selon la revendication 6, **caractérisé en ce que** les informations sont des clés d'authentification.

8. Procédé de configuration selon l'une des revendications précédentes, **caractérisé en ce que** l'étape « rechercher dans sa mémoire ou dans leur mémoire respective au moins une information » consiste à « présenter une étiquette d'un émetteur d'ordres (30) face à un scanner présent sur l'outil de configuration (20) ou taper son identifiant sur un clavier de l'outil de configuration ».

9. Installation de commande d'équipements (15) permettant la mise en oeuvre du procédé de configuration selon l'une des revendications 1 à 8, **caractérisée en ce qu'**elle comprend au moins un émetteur d'ordres (30), au moins un récepteur d'ordres (10) pilotant un équipement (15) et un outil de configuration (20) capable d'enregistrer des informations et de communiquer avec les émetteurs d'ordres (30) et les récepteurs d'ordres (10).

10. Installation selon la revendication 9, **caractérisée en ce que** l'outil de configuration (20), les émetteurs d'ordres (30) et les récepteurs d'ordres (10) sont équipés de moyens d'émission et de réception radiofréquences (11, 12, 21, 22, 31, 32) pour communiquer entre eux.

11. Installation selon la revendication 9, **caractérisée en ce que** les émetteurs d'ordres (30) et l'outil de configuration (20) présentent des moyens (26, 36) galvaniques d'échange d'informations.

12. Installation selon la revendication 9, **caractérisée en ce que** les émetteurs d'ordres (30) et l'outil de configuration (20) présentent des moyens optoélectroniques d'échange d'informations.

13. Installation selon la revendication 9, 11 ou 12, **caractérisée en ce que** l'outil de configuration (20) et les récepteurs d'ordres (10) sont équipés de moyens d'émission et de réception de type courants porteurs pour communiquer entre eux.

14. Installation selon la revendication 9, 11 ou 12, **caractérisée en ce que** l'outil de configuration (20) et les récepteurs d'ordres (10) sont reliés par un bus.

## Claims

1. A method of configuring a network of elements (10, 30) for controlling appliances (15) comprising at least one command transmitter (30) furnished with a memory and constituting a type of elements and at least one command receiver (10) furnished with a memory and constituting another type of elements, **characterized in that** it comprises the following steps:
- selecting at least one element of a first type,
- searching in its memory or in their respective memory for at least one piece of information,
- sending the piece of information or the information to a configuring tool (20),
- recording the piece of information or the information in the configuring tool (20),
- selecting at least one element of a second type,
- sending from the configuring tool (20) to the selected element or elements of the second type the piece of information or the information of the element or of the elements of the first type which are intended to link up with the selected element or elements of the second type,
- recording the piece of information or the information in the selected element or elements of the second type.

2. The configuring method as claimed in claim 1, which comprises the following preliminary step:
- recording in the configuring tool (20) logical identifiers associated with at least some of the elements of the network and the linkups which they are intended to sustain among themselves.

3. The configuring method as claimed in claim 1 or 2, **characterized in that** the piece of information or the information contain identification data and/or authentication data.

4. The configuring method as claimed in one of claims 1 to 3, **characterized in that** the elements of the first type are command transmitters (30) and **characterized in that** the elements of the second type are command receivers (10).

5. The configuring method as claimed in claim 4, **characterized in that** the information are physical identifiers.

6. The configuring method as claimed in one of claims 1 to 3, **characterized in that** the elements of the first type are command receivers (10) and **characterized in that** the elements of the second type are command transmitters (30).

7. The configuring method as claimed in claim 6, **characterized in that** the information are authentication keys.

8. The configuring method according to one of the preceding claims, wherein the step "searching in its memory or in their respective memory for at least one piece of information" consists of "presenting a label of a command transmitter (30) face-on to a scanner present on the configuration tool (20) or typing its identifier on a keyboard of the configuration tool".

9. An installation for controlling appliances (15) allowing the implementation of the configuring method as claimed in one of claims 1 to 8, which installation comprises at least one command transmitter (30), at least one command receiver (10) operating an appliance (15) and a configuring tool (20) capable of recording information and of communicating with the command transmitters (30) and the command receivers (10).

10. The installation as claimed in claim 9, **characterized in that** the configuring tool (20), the command transmitters (30) and the command receivers (10) are equipped with radiofrequency transmission and reception means (11, 12, 21, 22, 31, 32) for communication among themselves.

11. The installation as claimed in claim 9, **characterized in that** the command transmitters (30) and the configuring tool (20) exhibit galvanic means (26, 36) of exchanging information.

12. The installation as claimed in claim 9, **characterized in that** the command transmitters (30) and the configuring tool (20) exhibit optoelectronic means of exchanging information.

13. The installation as claimed in claim 9, 11 or 12, **characterized in that** the configuring tool (20) and the command receivers (10) are equipped with transmission and reception means of carrier currents type for communicating among themselves.

14. The installation as claimed in claim 9, 11 or 12, **characterized in that** the configuring tool (20) and the command receivers (10) are connected by a bus.

## Patentansprüche

1. Verfahren zur Konfiguration eines Netzwerks von Elementen (10, 30) zwecks Steuerung von Anlagen (15), mit mindestens einem Befehlssender (30), welcher mit einem Speicher versehen ist und eine erste Art von Elementen aufweist, und mit mindestens einem Befehlsempfänger (10), der mit einem Speicher ausgerüstet ist und aus einer zweiten Art von Elementen zusammengesetzt ist, **dadurch gekennzeichnet, dass** es die folgenden Verfahrensschritte aufweist:
Auswahl mindestens eines Elements der ersten Art,
Suche von mindestens einer Information in seinem zugehörigen Speicher oder im jeweilig anderen Speicher,
Übermittlung der Information bzw. der Informationen an ein Konfigurationswerkzeug (20),
Speicherung der Information oder der Informationen im Konfigurationswerkzeug (20);
Auswahl mindestens eines Elements der zweiten Art,
Übermittlung des Konfigurationswerkzeugs (20) an das Element bzw. die Elemente der zweiten Art, welche der ausgewählten Information bzw. Informationen des Elements bzw.
der Elemente der ersten Art entsprechen und dazu bestimmt sind, mit dem ausgewählten Element bzw. den ausgewählten Elementen der zweiten Art eine Beziehung zu bilden, Speicherung der Information bzw. der Informationen im gewählten Element bzw. in den gewählten Elementen der zweiten Art.

2. Verfahren zur Konfiguration nach Anspruch 1, **dadurch gekennzeichnet, dass** es den folgenden vorgängigen Schritt aufweist:
Speicherung von logischen Identifikationsdaten, welche mindestens bestimmten Elementen des Netzes zugeordnet sind, im Konfigurationswerkzeug (20), sowie der Beziehungen zwischen diesen Elementen, wobei diese Beziehungen dazu bestimmt sind, zwischen ihnen aufgestellt zu werden.

3. Verfahren zur Konfiguration gemäss Anspruch 1 oder 2, **dadurch gekennzeichnet, dass** die Information oder die Informationen Identifikationsdaten aufweisen und/oder Authentifizierungsdaten.

4. Verfahren zur Konfiguration nach einem der Ansprüche 1 bis 3, **dadurch gekennzeichnet, dass** die Elemente der ersten Art Befehlssender (30) sind, und dass die Elemente der zweiten Art Befehlsempfänger (10) sind.

5. Verfahren zur Konfiguration nach Anspruch 4, **dadurch gekennzeichnet, dass** die Informationen physikalische Identifizierungsdaten sind.

6. Verfahren zur Konfiguration nach einem der Ansprüche 1 bis 3, **dadurch gekennzeichnet, dass** die Elemente der ersten Art Befehlsempfänger (10) und die Elemente der zweiten Art Befehlssender (30) sind.

7. Verfahren zur Konfiguration nach Anspruch 6, **dadurch gekennzeichnet, dass** die Informationen Authentifizierungsschlüssel sind.

8. Verfahren zur Konfiguration nach einem der vorstehenden Ansprüche, **dadurch gekennzeichnet, dass** der Schritt zum Suchen in ihrem Speicher oder in ihrem jeweiligen Speicher mindestens eine Information betrifft, die darin besteht, dass "ein Etikett eines Befehlssenders (30) in einem Scanner des Konfigurationswerkzeugs (20) oder die Eingabe seiner Identifizierungsdatei auf einer Tastatur des Konfigurationswerkzeugs" gesucht wird.

9. Einrichtung zur Steuerung von einer Anlage (15) zwecks Ausführung des Verfahrens zur Konfiguration nach einem der Ansprüche 1 bis 8, **dadurch gekennzeichnet, dass** sie mindestens einen Befehlssender (30), mindestens einen Befehlsempfänger (10) zur Steuerung einer Anlage (15) und ein Werkzeug zur Konfiguration (20) aufweist, welches in der Lage ist, Informationen zu speichern und mit den Befehlssendern (30) und den Befehlsempfängern (10) zu kommunizieren.

10. Einrichtung nach Anspruch 9, **dadurch gekennzeichnet, dass** das Werkzeug zur Konfiguration (20), die Befehlssender (30) und die Befehlsempfänger (10) mit Sendemitteln und Empfangsmitteln über Funkfrequenzen (11, 12, 21, 22, 31, 32) für die gegenseitige Kommunikation ausgestattet sind.

11. Einrichtung nach Anspruch 9, **dadurch gekennzeichnet, dass** die Befehlssender (30) und das Werkzeug zur Konfiguration (20) Mittel (26, 36) aufweisen, welche einen galvanischen Informationsaustausch ermöglichen.

12. Einrichtung nach Anspruch 9, **dadurch gekennzeichnet, dass** die Befehlssender (30) und das Werkzeug zur Konfiguration (20) optoelektronische Mittel zum Austausch von Informationen aufweisen.

13. Einrichtung nach Anspruch 9, 11 oder 12, **dadurch gekennzeichnet, dass** das Mittel zur Konfiguration (20) und die Befehlsempfänger (10) mit Mitteln zur Ausgabe und zum Empfang ausgestattet sind, welche zum Austausch von einer gängigen Verbindung zwischen ihnen dienen.

14. Einrichtung nach Anspruch 9, 11 oder 12, **dadurch gekennzeichnet, dass** das Mittel zur Konfiguration (20) und die Befehlsempfänger (10) über einen Datenbus miteinander verbunden sind .
